# EUROPEAN PATENT SPECIFICATION

(11) **EP 3 836 599 B1**
(45) Date of publication and mention of the grant of the patent: **25.10.2023**
(21) Application number: 19383101.3
(22) Date of filing: 12.12.2019
(51) Int. Cl.: H04W 24/08, H04L 41/069, H04L 41/16

(54) **METHOD FOR DETECTING PERMANENT FAILURES IN MOBILE TELECOMMUNICATION NETWORKS**
VERFAHREN ZUR ERKENNUNG VON PERMANENTEN AUSFÄLLEN IN MOBILEN TELEKOMMUNIKATIONSNETZEN
PROCÉDÉ DE DÉTECTION DE DÉFAILLANCES PERMANENTES DANS DES RÉSEAUX DE TÉLÉCOMMUNICATION MOBILE

(43) Date of publication of application: 16.06.2021
(73) Proprietor: Telefonica Digital España, S.L.U., 28013 Madrid (ES)
(72) Inventor: PERINO, Diego, 28013 MADRID (ES); SERRA JULIA, Joan, 28013 MADRID (ES); YANG, Xiaoyuan, 28013 MADRID (ES)
(74) Representative: Herrero & Asociados, S.L.

(56) References cited:
- EP-A1- 2 894 813
- WO-A2-98/24222
- US-A1- 2018 150 758
- LINDHORST T ET AL: "Data-Mining-Based Link Failure Detection for Wireless Mesh Networks", RELIABLE DISTRIBUTED SYSTEMS, 2010 29TH IEEE SYMPOSIUM ON, IEEE, PISCATAWAY, NJ, USA, 31 October 2010 (2010-10-31), pages 353-357, XP031791467, ISBN: 978-0-7695-4250-8
- CHERRARED SIHEM ET AL: "A Survey of Fault Management in Network Virtualization Environments: Challenges and Solutions", IEEE TRANSACTIONS ON NETWORK AND SERVICE MANAGEMENT, IEEE, USA, vol. 16, no. 4, 1 December 2019 (2019-12-01), pages 1537-1551, XP011760438, DOI: 10.1109/TNSM.2019.2948420 [retrieved on 2019-12-09]
- DOU SHAOYU ET AL: "PC2A: Predicting Collective Contextual Anomalies via LSTM With Deep Generative Model", IEEE INTERNET OF THINGS JOURNAL, IEEE, USA, vol. 6, no. 6, 1 December 2019 (2019-12-01), pages 9645-9655, XP011760722, DOI: 10.1109/JIOT.2019.2930202 [retrieved on 2019-12-11]
- VALENTINA BALJAK ET AL: "Fault classification and model learning from sensory Readings Framework for fault tolerance in wireless sensor networks", INTELLIGENT SENSORS, SENSOR NETWORKS AND INFORMATION PROCESSING, 2013 IEEE EIGHTH INTERNATIONAL CONFERENCE ON, IEEE, 2 April 2013 (2013-04-02), pages 408-413, XP032422570, DOI: 10.1109/ISSNIP.2013.6529825 ISBN: 978-1-4673-5499-8
- STEINDER M L ET AL: "A survey of fault localization techniques in computer networks", SCIENCE OF COMPUTER PROGRAMMING, ELSEVIER BV, NL, vol. 53, no. 2, 1 November 2004 (2004-11-01), pages 165-194, XP004566811, ISSN: 0167-6423, DOI: 10.1016/J.SCICO.2004.01.010
- BARBARA PERNICI ET AL: "Automatic Learning of Repair Strategies for Web Services", WEB SERVICES, 2007. ECOWS '07. FIFTH EUROPEAN CONFERENCE ON, IEEE, PISCATAWAY, NJ, USA, 1 November 2007 (2007-11-01), pages 119-128, XP031188613, ISBN: 978-0-7695-3044-4

## Description

### Field of the invention

The present invention has its application within the telecommunication sector, more specifically, relates to the deployment of tools for Operations Support Systems (OSS) to assist Mobile Network Operators (MNO) in their efforts to optimize their network operations and maintain network extensive deployments in any area, underserved (un-)connected remote areas included.

More particularly, the present invention refers to a method for detecting permanent failures in mobile or cellular networks.

### Background of the invention

Researchers have been exploring wireless community networks for many years and, more recently, researchers and practitioners have started building community mobile networks. Maintaining large mobile telecommunication network deployments is challenging.

When a cell of a cellular/mobile network fails, there are two main costs associated to this failure: i) the revenue loss associated with the traffic not delivered and ii) the losses of customers who leave the operator as a consequence of the service disruption and the time and cost spent in trying to recover the lost customers.

Therefore, there is a need in the state of the art for providing a cost-saving method for detecting failures in mobile telecommunication networks in prevention of the traffic and customers losses. A method of detecting failures in mobile telecommunication networks is known e.g. from EP2894813A1, published on 2015-07-15, where an alarm management system is creating a knowledge base such that alarms can be grouped in order to identify the root cause. However, it does not help to detect permanent failures.

### Summary of the invention

The present invention solves the aforementioned problems and overcomes previously explained state-of-art work limitations by providing a method for detecting permanent failures or failing sites.

Given a set of input data including alarms generated by cells, extended by including additional available information from the cell site provided by the mobile network operator (for example, additional input data such as: site identifier, raised hour, day of the week, site location, type of base station or network controller, whether site is connected via satellite, power from the grid, site revenue, monthly number of customers, daily weather condition, etc.), the goal of the invention is twofold:
i) once a failure is started/detected, to identify/determine if this failure is going to be permanent; i.e., longer than a given number of hours, e.g., 24h.
ii) to identify cells that are permanently failing, i.e., identifying sites that in a time window of W hours fail for at least X hours, (e.g., W=48h and X=24h).

The invention covers the input data, the way this input data is manipulated to be used as actual input for a machine learning model (i.e., feature engineering) coupled with the definition and usage of an actual model. Preferably, machine learning techniques such as ensemble learning and gradient boosting are used to apply a combination of several models, e.g., an ensemble of (extremely) randomized decision trees.

For the same input (i.e., future engineering), other machine learning or deep learning models can be applied as Support Vector Machines (SVMs), Convolutional Neural Network (CNN) in combination with Recurrent Neural Network (RNN), Long Short-Term Memory (LSTM), etc. In a possible embodiment, LSTM with the input sequences being based on feature engineering or raw data techniques can be used for deep learning.

The input data for the machine learning or deep learning model comprise several alarms that account for a wide range of events affecting a mobile network, including power supply issues (e.g., AC -alternating current- input power failure, battery high temperature, low battery level), network congestion, radio network malfunctions (e.g., radio link failures and anomalies), or hardware-level issues (e.g., RF - radiofrequency- unit overload is reported when the CPU usage of the RF unit is beyond an operating threshold), etc.. These alarms are classified into different severity levels (e.g., warning level, minor level, major level and critical level), and for each of level, the time at which the alarm was raised as well as the time it was cleared are recorded.

An aspect of the present invention refers to a computer program implemented method for detecting permanent failures in mobile networks which comprises the following steps:
- collecting input data, the input data comprising one or more network alarms from at least a network element, the one or more network alarms notifying a failure in a site of the mobile network;
- classifying each network alarm and, for each class of network alarm, recording an initial time of a failure at which at least one network alarm of a class raises and a duration in time during said at least one network alarm is active;
- using a machine learning model or a deep learning model, trained with the collected input data, to determine whether the failure is permanent or not by the following steps:
   a. for at least one class of network alarm, at every initial time of the failure, merging all the subsequent network alarms of the same class of the failure;
   b. querying the learning model if one of at least the failure or one of the merged subsequent network alarms is active after a defined time period;
   c. determining that the failure is permanent in the site if the answer from the query is positive. and using the machine learning model or the deep learning model, trained with the collected input data comprising additional information associated with the site, to determine whether the site is permanent failing or not by the following steps:
- slotting the time and define a minimum number of time slots within a time window;
- for each time slot, querying the learning model if one of at least the failure or one of the merged subsequent network alarms is active within the time window for at least the defined minimum number of time slots;
- determining that the site is permanent failing if the answer from the previous query is positive.

The proposed method can be inmplemented as an extension of an Operations Support System (OSS) leveraging advanced analytics and machine learning with the goal of optimizing network maintenance actions while reducing operational costs.

The method in accordance with the above described aspects of the invention has a number of advantages with respect to the aforementioned prior art, which can be summarized as follows:
- The present invention reduces the costs associated to a failing site.
- The use of analytics on network data provide valuable insights on an specific problem of a mobile network, and help the MNO deriving heuristics improving operation management.
- The present invention allows the MNO, by identifying whether a failure is permanent or not, to avoid unnecessary intervention for temporal failures.

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a graphic of the performance and recall results of the permanent failure detection model, according to a possible use case of the invention.
Figure 2 shows a graphic of the cost saving results versus the parameters of the model for a first cost scenario, according to a possible use case of the invention.
Figure 3 shows a graphic of the cost saving results versus the parameters of the model for a first cost scenario, according to a possible use case of the invention.

### Preferred embodiment of the invention

The embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

A preferred embodiment of the invention relates to a method for detecting a failure and/or a failing site and identifying if the failure is permanent.

This method can be implemented as an extension of an Operations Support System or OSS, the method seamlessly integrating analytics and Machine Learning capabilities in different operational processes. The rationale for this extension is to aggregate different contextual data (e.g., alarms, weather, business Key Performance Indicators or KPIs, geographical information, etc.) and use these capabilities to guide the operations team and take decisions in real-time.

In a possible scenario of use, a network monitoring platform of a remote community mobile network deployment collects network alarms from different network elements or sites (e.g., radio network malfunctions, power supply issues, backhaul saturation). The network monitoring platform generates input for the OSS, as well as for its analytics/machine learning extension. First, the method collects a unique dataset from the captured network alarms that captures the real-world operations (e.g., a rural community network deployment) and captures failure patterns (e.g.,alarm and failure duration, inter-failure time)..

A use case example is described below to show how this extension based on a proposed ML (Machine Learning) model helps the MNO predict whether a failure is permanent or transient. The proposed ML model results in savings between 5% and 20% of outage and intervention costs, depending on the cost model.

ML Model: Using the resources available on-site and the way ML containers are implemented, a powerful but lightweight static model is chosen, consisting of an ensemble of random decision trees. Tree ensembles are fast in operation and do not require specific feature pre-processing. They can also work with large instance and/or large feature sets and perform feature selection while training. Modern implementations also offer the capacity to effectively tune the algorithm for class-imbalanced problems, without the need to resort to further strategies. For instance, gradient boosted trees are known to consistently outperform other ML models across a wide range of classification problems. In a possible implementation, an extreme gradient boosting (XGBoost) is used as a competitive tree ensemble with a fast and scalable learning procedure which is also easy to deploy. For example, the implementation disclosed in https://xgboost.ai (version 0.81) can be used.

Focussed on the objective of detecting permanent failures, firstly it is defined that failures lasting more than a time threshold, for example, of 24 hours are determined to be permanent. This use case can be modelled as a binary classification problem and be tackled with an ML model.

The current use case could also be framed as a sequence processing problem, in pre-analysis, and recurrent neural network models could be used. However, they would require extra resources for fast operation in graphics processing units (GPUs). Therefore, the use of gradient boosted trees is preferred.

Different types of possible failures can be defined, for example: Failure 1) voltage standing wave ratio (VSWR) at the antenna port of the transmitting channel of an RF unit is higher than the pre-set threshold; Failure 2) AC input power failure; and Failure 3) GSM cell out of service. In a monitoring period, these failures can affect all the sites of a deployed mobile network at different moments in time.

For ground truth and setting, the method identifies a failure as permanent if it is longer than 24h, as defined before. At every point in time t when a failure is raised, all subsequent critical failures are merged together and, if some of them is still active after 24 h, the failure raised at time t is labelled as permanent. Otherwise, operation is considered normal for this use case. In the merging process, critical failures that are interleaved by less than one hour are considered the same failure. The ground truth therefore consists of a 'permanent' yes/no label every time point t monitored by the method. A query to the ML model is made at every time point t for the corresponding site. Furthermore, the ML model can be queried after t in order to assess whether some accuracy can be gained, by including information obtained after the alarm has raised. For that, additional models at other next time points measured from the monitored time point t (e.g., at t +6h, t +12h, and t +18h) are trained and evaluated.

For every monitored time point t and for every site, a feature set is obtained, including summaries of previous alarms across different time windows (e.g., 1h and 24h windows). The summaries comprise the number of occurrences, the mean duration, and the total duration of an alarm. Additional time windows (e.g., up to one week) could be considered. In a preferred embodiment, to dynamically assess the probability of failure after the monitored time point t, similar summaries for windows of 6h, 12h, and 18h after t can be concatenated. The feature set can be extended by including additional information like site identifier, raised hour, day of the week, site location, type of tower, site revenue, monthly number of customers, daily weather condition, etc. These data are either categorical or numerical features, which do not require a summary, as they correspond to static or long term values.

Furthermore, the method for detecting permanent failures allows the detection of permanent failing sites.

Focussed on the objective of detecting permanent failing sites, firstly it is defined that permanent failing sites are sites that in a time window of W hours fail for at least a time period of X hours. Typical values are W=48h and X=24h. As for the previous use case of detecting permanent failures, this use case is modelled as a binary classification problem and tackled with an ML model. Differently from the previous use case, the time is slotted (with one hours bin), and for every time slot and every site, the above described classification problem is applied. As for the previous use case, an Extreme Gradient Boosting or XGBoost model is used preferably. Similarly to the previous case, for every slot and every site, summaries of previous alarms are obtained for different time windows (e.g., up to X/2 hours in the past). For the case of implementing deep learning by recurrent neural network, raw alarm data can also be used as input. Such features can be complemented with the additional information described in the previous use case.

Another example of use case relies on data analysis to recommend energy-related field operations. If the method detects that a failure is due to energy failure, there are three possible reasons: faulty component (probably, the rectifier or the inverter), battery charging logic mis-configuration or battery aging. Using the available input dataset, a model is built for quantifying the probability for each cause and performs a recommendation. For instance, the operators can recommend the field team to take an inverter with them instead of batteries, thus avoiding the transport of unnecessary heavy batteries to the place.

For a particular example, the ML model is implemented using the extreme gradient boosting (XGBoost) algorithm disclosed in https://xgboost.ai (version 0.81) with default parameters, except for the parameter class-imbalance weight ω and the parameter threshold τ used to define positive and negative outcomes (positive class corresponds to permanent failures).

Using Precision and Recall, the ML model, XGBoost, is evaluated in terms of false positives and false negatives for an experimental setup in a remote community environment. Precision-Recall curves summarize the trade-off between the true positive rate and the positive predictive value for a predictive model using different probability thresholds.

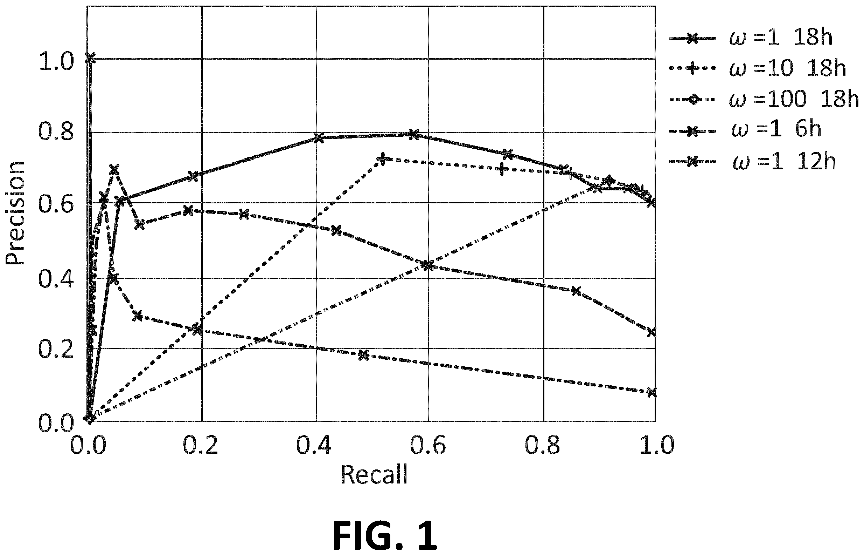

Figure 1 shows a graphical analysis of the permanent failure detection based on the XGBoost model illustrating Precision and Recall results versus the parameters class-imbalance weight ω and threshold τ used in the model. These two parameters ω and τ are tuned to perform classification (one of the simplest ways to address the class imbalance is to simply provide a weight ω for each class which places more emphasis on the minority classes such that the end result is a classifier which can learn equally from all classes; τ is a probability threshold by which above that amount the model predicts that the observation belongs to the positive class). In the example shown in Figure 1, one month was used for training and the next, one, month for validation. The graphic of Figure 1 shows Precision and Recall values on failures that lasted 18h already for different values of the class-imbalance weight ω, where every point in the graphic is determined by a different threshold τ ∈ {0, 0.1, 0.2, ... 1}. There is a tradeoff between Precision and Recall: Decreasing τ improves Precision at the expense of lowering Recall and increasing ω improves Precision for high Recall values. However, the best Precision scores are achieved when class imbalance is not compensatd. Figure 1 also reports Precision and Recall values on failures that already lasted 6 h and 12 h. Precision and Recall are highly correlated with the time a failure has been active already, i.e., best Precision/Recall are achieved on failures lasted 18 h already, followed in order by failures evaluated after 12 h and 6 h activity.

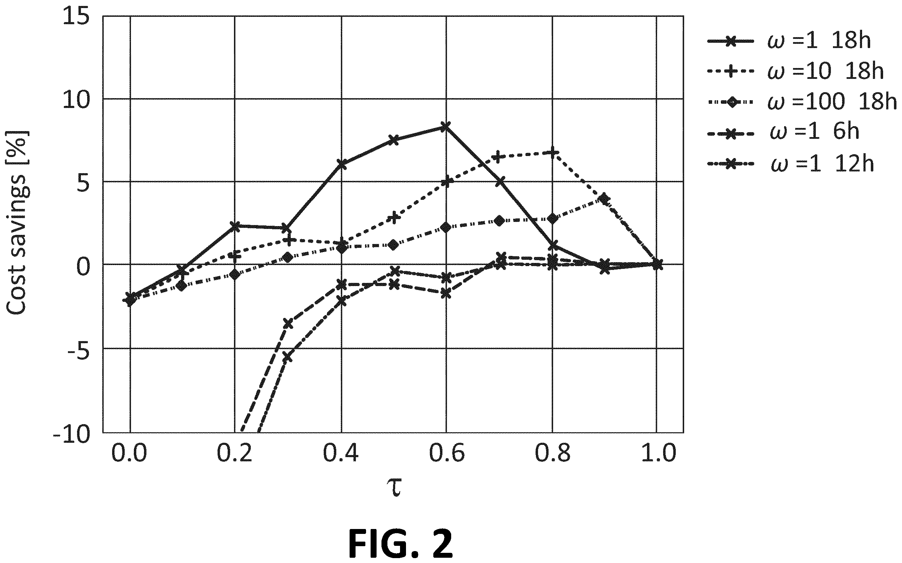

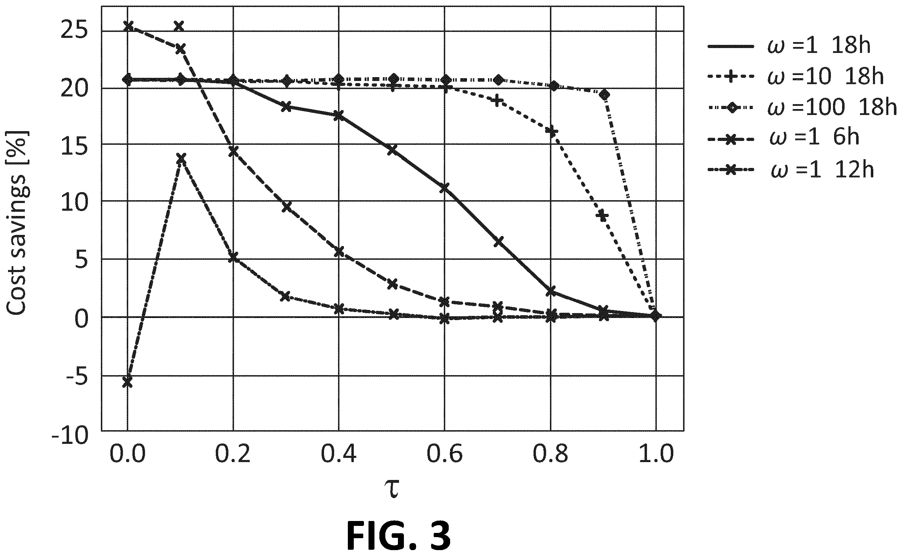

When evaluating the performance in the considered use case, it is important to consider the operational cost savings the model provides with respect to a current solution or baseline heuristics. As reference cost, the case considers failures that are longer than 24h only, and an intervention are scheduled after the 24h. If the time at which the failure reaches 24 h is outside the slot for scheduling intervention, the intervention will be scheduled for the day after. The cost takes into account the time from when the failure is raised and when the intervention is actually scheduled, and is determined by the revenue lost because of the out of service hours (i.e., traffic not delivered, customer churn). The same cost model is applied when the ML model predicts that a failure will be longer than 24h (for instance, after 18h). If a false positive is raised, there is a penalty cost that is added for a useless intervention. If a permanent failure is correctly detected, out of service hours are reduced thanks to the anticipated intervention scheduling. The results of the cost model are shown as cost saving with respect to reference cost in Figures 2 and 3 respectively for two realistic cost scenarios in rural deployments: i) both costs are in the order of tens of dollars per day of outage or per intervention (scenario A); ii) revenue loss is one order of magnitude higher than cost of intervention (scenario B).

Figure 2 shows the cost saving versus the parameters ω and τ of the model for the cost scenario A. It is observed that cost savings for failures that lasted 6h and 1 h are always negative for τ < 0.7 and close to 0 for τ ≥ 0.7. This corresponds to scheduling very few interventions (i.e., Recall of 5% for Precision of 70%) and wait 24 h for the other failures with a consequently limited or null gain. Therefore, the parameters of model at the time points 6h and 12h are setup to ω = 1 and τ = 0.7.

Figure 3 shows the cost saving versus the parameters ω and τ of the model for the cost scenario B, i.e., daily revenue losses are one order of magnitude higher than intervention cost. In this case, highest cost savings can be achieved for τ < 0.3 values. As revenue losses have a significant weight with respect to intervention cost, it is better to have high Recall with low Precision under this scenario. For some model the highest savings are achieved for τ = 0, i.e., sending a technician for all active failures. However, despite overall costs savings are higher, this implies a higher number of technicians to be employed and managed.

Investigate how long the model is valid after training a model sensitivity analysis is disclosed below. Again, the model is focussed on failures lasting at least 18h, but same trends can be observed for 6 and 12 h. The model was trained during one month as reference, and cost savings (cost scenario A) were assessed by shifting the testing period to have a gap of one week, one month, and two months after training. The testing period is of one month. The shifted cost savings are compared with the case where continuous training is performed, i.e., where the model is retrained with the data of the month immediately before the testing period. Results are reported in Table 1 below.

**Table 1: Validity of training over time.**

| | 1 Week | 1 Month | 2 Months |
|---|---|---|---|
| Cost saving continuous training | 7.5% | -4.0% | 4.7% |
| Cost saving static training | 5.8% | -4.4% | -1.7% |
| Cost saving delta | 1.5% | 0.4% | 6.4% |

Table 1 shows that the cost savings provided by the trained model are close to the ones of continuous training, up to two months when a performance degradation is clearly observed. Therefore, retraining every month is recommended.

Table 2 shows the average cost saving across months of the model for failures lasting at least 6 h, 12 h and 18 h in the two cost scenarios A and B.

**Table 2: Cost savings under the two cost scenarios.**

| | 6 hours | 12 hours | 18 hours |
|---|---|---|---|
| cost scenario A | -0.3% | 0% | 4.9% |
| cost scenario B | 8.9% | 18.4% | 19.8% |

For cost scenario A, the model applied on failures that lasted at least 18 h provides significantly better saving than heuristics. All heuristics have an operational cost higher than waiting 24h to schedule intervention. However, no gains are provided after 6 h, 12 h of active failures. For cost scenario B, the model provides similar cost savings for failures that already lasted 12 h and 18 h.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A computer program implemented method for detecting permanent failures in a mobile network, comprising:
- collecting input data which comprise one or more network alarms from at least a network element, the one or more network alarms notifying a failure in a site of the mobile network;
- classifying each network alarm and, for each class of network alarm, recording an initial time of a failure at which at least one network alarm of a class raises and a duration in time during said at least one network alarm is active;
**characterized by** further comprising using a machine learning model or a deep learning model, trained with the collected input data, to determine whether the failure is permanent or not by the following steps:
- for at least one class of network alarm, at every initial time of the failure, merging all the subsequent network alarms of the same class of the failure;
- querying the learning model if one of at least the failure or one of the merged subsequent network alarms is active after a defined time period;
- determining that the failure is permanent in the site if the answer from the query is positive;
and using the machine learning model or the deep learning model, trained with the collected input data comprising additional information associated with the site, to determine whether the site is permanent failing or not by the following steps:
- slotting the time and define a minimum number of time slots within a time window;
- for each time slot, querying the learning model if one of at least the failure or one of the merged subsequent network alarms is active within the time window for at least the defined minimum number of time slots;
- determining that the site is permanent failing if the answer from the previous query is positive.

2. The method according to any proceeding claim, wherein querying the learning model is performed at the initial time of the failure.

3. The method according to any proceeding claim, wherein the input data is collected within a plurality of time windows and querying the learning model is performed at a time instant after the initial time of the failure belonging to at least one of the plurality of time windows.

4. The method according to any proceeding claim, wherein the machine learning model used is an ensemble of random decision trees.

5. The method according to any proceeding claim, wherein the machine learning model used is an extreme gradient boosting, XGboost.

6. The method according to any proceeding claim, wherein the deep learning model used is performed by a Long Short-Term Memory, LSTM.

7. The method according to any proceeding claim, wherein the input data are based on feature engineering or raw data.

8. The method according to any proceeding claim, wherein the input data further comprise additional information from the site provided by mobile network, the additional information comprising at least one of: a site identifier, site location, type of base station or network controller covering the site, whether the site is connected via satellite, power from the grid, site revenue, number of customers, current time and weather data.

9. The method according to any proceeding claim, wherein collecting the input data comprises, for every site of the mobile network and for a time point, building a feature set which comprises summaries of previous alarms, raised before the time point, across multiple time windows, the summaries comprising the number of occurrences, the mean duration, and the total duration of each alarm.

## Patentansprüche

1. Computerprogramm-implementiertes Verfahren zum Detektieren permanenter Ausfälle in einem Mobilfunknetz, aufweisend:
- Sammeln von Eingangsdaten, die einen oder mehrere Netzwerkalarme von mindestens einem Netzwerkelement aufweisen, wobei der eine oder die mehreren Netzwerkalarme einen Ausfall an einer Stelle des Mobilfunknetzes melden;
- Klassifizieren jedes Netzwerkalarms und, für jede Klasse von Netzwerkalarmen, Aufzeichnen eines Anfangszeitpunkts eines Ausfalls, bei welchem mindestens ein Netzwerkalarm einer Klasse auslöst und eine Zeitdauer, während der genannte mindestens eine Netzwerkalarm aktiv ist;
**dadurch gekennzeichnet, dass** es weiter das Verwenden eines Machine-Learning-Modells oder eines Deep-Learning-Modells aufweist, das mit den gesammelten Eingangsdaten trainiert wurde, um durch die folgenden Schritte zu bestimmen, ob der Ausfall permanent ist oder nicht:
- Zusammenführen aller nachfolgenden Netzwerkalarme der gleichen Klasse des Ausfalls, für mindestens eine Klasse eines Netzwerkalarms, zu jedem Anfangszeitpunkt des Ausfalls;
- Abfragen des Lernmodells, wenn mindestens einer der Ausfälle oder einer der zusammengefassten nachfolgenden Netzwerkalarme nach einem definierten Zeitabschnitt aktiv ist;
- Bestimmen, dass der Ausfall an der Stelle permanent ist, wenn die Antwort von der Abfrage positiv ist;
und Verwenden des Machine-Learning-Modells oder des Deep-Learning-Modells, welches mit den gesammelten Eingangsdaten, die mit der Stelle assoziierte zusätzliche Informationen aufweisen, trainiert wurde, um durch die folgenden Schritte zu bestimmen, ob die Stelle dauerhaft ausfällt oder nicht:
- Einteilen der Zeit und Festlegen einer Mindestanzahl von Zeit-Slots innerhalb eines Zeitfensters;
- Abfragen des Lernmodells für jeden Zeit-Slot, ob mindestens einer von dem Ausfall oder einer der zusammengeführten nachfolgenden Netzwerkalarme innerhalb des Zeitfensters für zu mindestens die definierte Mindestanzahl von Zeit-Slots aktiv ist;
- Festlegen, dass die Stelle dauerhaft ausfällt, wenn die Antwort der vorherigen Abfrage positiv ist.

2. Verfahren nach einem vorhergehenden Anspruch, wobei die Abfrage des Lernmodells zum Anfangszeitpunkt des Ausfalls durchgeführt wird.

3. Verfahren nach einem vorhergehenden Anspruch, wobei die Eingangsdaten innerhalb einer Vielzahl an Zeitfenstern gesammelt werden und das Abfragen des Lernmodells zu einem Zeitpunkt sofort nach dem Anfangszeitpunkt des Ausfalls durchgeführt wird, der zu mindestens einem der Vielzahl an Zeitfenstern gehört.

4. Verfahren nach einem vorhergehenden Anspruch, wobei das verwendete Machine-Learning-Modell ein Ensemble von Zufallsentscheidungsbäumen ist.

5. Verfahren nach einem vorhergehenden Anspruch, wobei das verwendete Machine-Learning-Modell ein Extreme-Gradient-Boosting, XG-Boost, ist.

6. Verfahren nach einem vorhergehenden Anspruch, wobei das verwendete Deep-Learning-Modell durch ein Long-Short-Term-Memory, LSTM, durchgeführt wird.

7. Verfahren nach einem vorhergehenden Anspruch, wobei die Eingangsdaten auf Feature-Engineering oder Rohdaten basieren.

8. Verfahren nach einem vorhergehenden Anspruch, wobei die Eingangsdaten ferner zusätzliche Informationen, die von dem Mobilfunknetz bereitgestellt werden, von der Stelle aufweisen, wobei die zusätzlichen Informationen mindestens eines aufweisen: eine Stellenkennung, Stellenlage, Typ der Basisstation oder des Netzwerk-Controllers, der die Stelle abdeckt, ob die Stelle über Satellit verbunden ist, Strom aus dem Netz, Stellenumsatz, Anzahl der Kunden, aktuelle Uhrzeit und Wetterdaten.

9. Verfahren nach einem vorhergehenden Anspruch, wobei das Sammeln der Eingangsdaten, für jede Stelle des Mobilfunknetzes und für einen Zeitpunkt, das Aufbauen eines Merkmalssatzes aufweist, der Zusammenfassungen früherer Alarme, die vor dem Zeitpunkt ausgelöst wurden, über mehrere Zeitfenster aufweist, wobei die Zusammenfassungen die Anzahl der Vorkommnisse, die mittlere Dauer und die Gesamtdauer jedes Alarms aufweisen.

## Revendications

1. Procédé mis en oeuvre par programme informatique pour détecter les défaillances permanentes dans un réseau mobile, comprenant :
- la collecte de données d'entrée qui comprennent une ou plusieurs alertes de réseau en provenance d'au moins un élément de réseau, les une ou plusieurs alertes de réseau notifiant une défaillance dans un site du réseau mobile ; et
- la classification de chaque alerte de réseau et, pour chaque classe d'alerte de réseau, l'enregistrement d'un temps initial d'une défaillance auquel au moins une alerte de réseau d'une classe est déclenchée et d'une durée temporelle pendant laquelle ladite au moins une alerte de réseau est active ;
**caractérisé en ce qu'**il comprend en outre l'utilisation d'un modèle d'apprentissage par machine ou d'un modèle d'apprentissage profond, soumis à entraînement à l'aide des données d'entrée collectées, pour déterminer si la défaillance est permanente ou non au moyen des étapes suivantes :
- pour au moins une classe d'alerte de réseau, à chaque temps initial de la défaillance, la fusion de toutes les alertes de réseau subséquentes de la même classe de la défaillance ;
- l'interrogation du modèle d'apprentissage pour lui demander si au moins l'une parmi la défaillance ou l'une des alertes de réseau subséquentes fusionnées est active après une période temporelle définie ;
- la détermination du fait que la défaillance est permanente au niveau du site si la réponse en provenance de l'interrogation est positive ;
et l'utilisation du modèle d'apprentissage par machine ou du modèle d'apprentissage profond, soumis à entraînement à l'aide des données d'entrée collectées qui comprennent une information additionnelle qui est associée au site, pour déterminer si le site présente une défaillance permanente ou non au moyen des étapes suivantes :
- la division du temps selon des intervalles temporels et la définition d'un nombre minimum d'intervalles temporels à l'intérieur d'une fenêtre temporelle ;
- pour chaque intervalle temporel, l'interrogation du modèle d'apprentissage pour lui demander si au moins l'une parmi la défaillance ou l'une des alertes de réseau subséquentes fusionnées est active à l'intérieur de la fenêtre temporelle pendant au moins le nombre minimum défini d'intervalles temporels ; et
- la détermination du fait que le site est en défaillance permanente si la réponse en provenance de l'interrogation précédente est positive.

2. Procédé selon la revendication précédente, dans lequel l'interrogation du modèle d'apprentissage est effectuée au temps initial de la défaillance.

3. Procédé selon l'une quelconque des revendications précédentes, dans lequel les données d'entrée sont collectées à l'intérieur d'une pluralité de fenêtres temporelles et l'interrogation du modèle d'apprentissage est effectuée à un instant temporel après le temps initial de la défaillance qui appartient à au moins l'une de la pluralité de fenêtres temporelles.

4. Procédé selon l'une quelconque des revendications précédentes, dans lequel le modèle d'apprentissage par machine est un ensemble d'arborescences de décisions aléatoires.

5. Procédé selon l'une quelconque des revendications précédentes, dans lequel le modèle d'apprentissage par machine qui est utilisé est un Extreme Gradient Boosting, XGboost.

6. Procédé selon l'une quelconque des revendications précédentes, dans lequel le modèle d'apprentissage profond qui est utilisé est mis en oeuvre au moyen d'une mémoire à court et long termes, LSTM.

7. Procédé selon l'une quelconque des revendications précédentes, dans lequel les données d'entrée sont basées sur des données d'ingénierie de caractéristiques ou des données brutes afférentes.

8. Procédé selon l'une quelconque des revendications précédentes, dans lequel les données d'entrée comprennent en outre une information additionnelle en provenance du site qui est fourni par le réseau mobile, l'information additionnelle comprenant au moins un élément informationnel parmi : un identifiant de site, une localisation de site, un type de station de base ou de contrôleur de réseau qui couvre le site, si oui ou non le site est connecté par satellite(s), une puissance électrique en provenance du réseau électrique, des revenus du site, un nombre de clients, des données de temps et des données météorologiques.

9. Procédé selon l'une quelconque des revendications précédentes, dans lequel la collecte des données d'entrée comprend, pour chaque site du réseau mobile et pour un point temporel, l'élaboration d'un ensemble de caractéristiques qui comprend des résumés d'alertes précédentes, déclenchées avant le point temporel, sur de multiples fenêtres temporelles, les résumés comprenant le nombre d'occurrences, la durée moyenne et la durée totale de chaque alerte.
